Europäisches Patentamt

European Patent Office

Office européen des brevets

(19)

(11) Numéro de publication : **0 077 580**
**B1**

(12) **FASCICULE DE BREVET EUROPÉEN**

(45) Date de publication du fascicule du brevet :
02.03.88

(21) Numéro de dépôt : 82201206.8

(22) Date de dépôt : 28.09.82

(51) Int. Cl.⁴ : **A 22 B   5/04**

(54) Installation pour la récupération de sang de qualité alimentaire dans un abattoir.

(30) Priorité : 15.10.81 FR 8119571

(43) Date de publication de la demande :
27.04.83 Bulletin 83/17

(45) Mention de la délivrance du brevet :
02.03.88 Bulletin 88/09

(84) Etats contractants désignés :
AT BE CH DE GB IT LI LU NL SE

(56) Documents cités :
US-A- 2 422 194

(73) Titulaire : **Sommier, René**
**La Sarretie B.P. 121**
**F-19014 Brive Cedex (FR)**

(72) Inventeur : **Sommier, René**
**La Sarretie B.P. 121**
**F-19014 Brive Cedex (FR)**

(74) Mandataire : **Barre, Philippe**
**Cabinet Barre-Gatti-Laforgue 95 rue des Amidonniers**
**F-31069 Toulouse Cédex (FR)**

Jouve, 18, rue St-Denis, 75001 Paris, France

EP 0 077 580 B1

## Description

L'invention concerne une installation pour la récupération de sang de qualité alimentaire dans un abattoir ; par « sang de qualité alimentaire » ou par abréviation « sang alimentaire », on entend un sang provenant de bêtes saines et ayant des qualités de stérilité et de propreté hygiénique rendant ses composants susceptibles d'être utilisés comme additifs dans les applications les plus exigeantes, en particulier, comme additifs incorporés à un produit alimentaire destiné à l'animal ou à l'homme (il est bien entendu que le terme « qualité alimentaire » qualifie le sang en tant que tel et n'a aucun caractère limitatif quand aux applications possibles de celui-ci).

Actuellement, les animaux sont saignés dans les abattoirs dans des couloirs de saignées dotés en plancher de caillebotis qui surmontent des rigoles d'écoulement du sang. Ce sang, dit sang d'équarrissage, est recueilli dans un collecteur général dans lequel aboutissent ces rigoles et constitue un produit secondaire extrêmement gênant en pratique. En effet, il n'est utilisable que pour des applications triviales très limitées qui généralement ne permettent pas d'amortir le coût des traitements nécessaires ; de plus, le rejet de ce sang dans les cours d'eau est une grave source de pollution et ne peut être envisagé qu'après des traitements relativement coûteux.

Or on sait que le sang est un produit riche, qui contient en particulier une protéine noble (la globine), de nature à enrichir de façon extrêmement intéressante de nombreux produits d'alimentation pour l'homme ou pour l'animal ou susceptible d'être utilisée dans d'autres applications en raison de ses propriétés technologiques intéressantes (pouvoir moussant et émulsifiant).

Une solution à ce problème est proposée dans le brevet US-A-2 422 194. Ce brevet décrit, en effet, une installation pour la récupération de sang dans un abattoir, dans laquelle les bêtes sont suspendues à un transporteur destiné à les entraîner le long d'un couloir de saignée, le sang étant récupéré dans une goulotte de réception s'étendant le long de ce couloir avant d'être entraîné vers des moyens de stockage. En outre, des moyens d'injection d'additifs dans la goulotte visent à éviter l'altération ou la coagulation du sang recueilli. Cette installation permet donc d'automatiser les opérations de récupération du sang. Toutefois, cette installation ne permet pas de récupérer un sang de qualité alimentaire et ce sang ne sera utilisable que pour des applications triviales. En effet, aucune disposition n'est prévue dans cette installation pour le cas où le sang récupéré serait pollué par le sang d'une bête malade.

L'invention se propose de pallier à cet inconvénient et de fournir une installation permettant de récupérer le sang produit dans les abattoirs et d'en stocker les composants (notamment cruor et plasma), dans des conditions compatibles avec une utilisation ultérieure comme additifs alimentaires ou avec toute autre application exigeant des qualités analogues dites qualités alimentaires.

Un autre objectif de l'invention est de réduire considérablement les quantités de sang d'équarrissage s'écoulant dans les abattoirs par les moyens de recueil prévus à cet effet.

L'installation visée par l'invention peut équiper tout abattoir de type classique doté d'une ou plusieurs chaînes de travail comprenant un poste d'abattage, un couloir de saignée, un circuit de dépeçage et des moyens de recueil du sang d'équarrissage (rigoles sous caillebotis ou autres). L'installation conforme à l'invention comprend, associés à chaque chaîne de travail :

un transporteur disposé en partie haute du couloir de saignée en vue de suspendre les bêtes et de les entraîner le long dudit couloir après la saignée,

une goulotte de réception de sang s'étendant le long du couloir de saignée et ayant une forme adaptée pour guider les bêtes au voisinage de la partie saignée.

Selon l'invention, cette installation se caractérise en ce qu'elle comprend :

• un poste de contrôle vétérinaire, disposé en aval du circuit de dépeçage et comportant un organe manuel d'interruption de cycle,

• une série de cuves, dites primaires, adaptées pour permettre un stockage provisoire d'une quantité de sang supérieure à celle fournie par le nombre maximum de bêtes susceptibles d'être présentes à un instant donné sur la chaîne depuis l'entrée du couloir de saignée jusqu'au poste de contrôle vétérinaire,

• des conduits reliant chaque cuve primaire à la sortie de la goulotte, lesdits conduits étant associés à des moyens d'aiguillage de l'écoulement vers telle ou telle cuve primaire sélectionnée,

• trois circuits de vidanges des cuves primaires, reliés à la sortie de celles-ci et dotés de moyens d'aiguillage, ces circuits comprenant un premier circuit pour le transfert du sang de qualité alimentaire, un deuxième circuit relié aux moyens de recueil de sang d'équarrissage et un troisième circuit relié à l'égout pour l'évacuation de liquide de nettoyage,

• des moyens de fractionnement du sang reliés au circuit de vidange du sang alimentaire et adaptés pour délivrer à ses sorties des fractions séparées telles que cruor et plasma,

• des moyens de stockage desdites fractions, reliés aux sorties des moyens de fractionnement,

• des moyens de pompage adaptés pour assurer l'écoulement dans les différents circuits ou conduits,

• des moyens de comptage des bêtes passant dans la chaîne de travail,

• et une unité de commande agencée pour recevoir les signaux issus des moyens de comptage et de l'organe d'interruption du poste vétérinaire, et adaptée pour assurer, en l'absence d'intervention sur l'organe d'interruption, le déroulement d'un cycle programmé de récupération de sang alimentaire et, en cas d'intervention sur cet organe d'interruption, pour commander l'arrêt du cycle et la vidange vers les moyens de recueil de sang d'équarrissage de la cuve primaire ayant contenu le sang de la bête qui a déterminé l'intervention et, éventuellement, des cuves primaires suivantes.

Selon un mode de réalisation préféré, les moyens de comptage comprennent un compteur d'impulsions, dit compteur d'entrée, situé à l'entrée du couloir de saignée, et un compteur d'impulsions dit compteur de sortie, situé en aval du circuit de dépeçage au niveau du poste de contrôle vétérinaire.

Chaque cuve primaire présente une capacité permettant de stocker le sang issu d'un nombre prédéterminé (N) de bêtes.

L'unité de commande qui peut être un automate programmable est adaptée pour commander (en l'absence d'intervention du vétérinaire) le déroulement du cycle normal suivant : aiguillage du sang vers une autre cuve primaire au terme de chaque lot de N bêtes enregistrées par le compteur d'entrée, et vidange vers le circuit de sang alimentaire de la cuve contenant le sang du dernier lot de N bêtes enregistrées au compteur de sortie.

En cas de signal provenant d'une intervention du vétérinaire, cette unité commande l'arrêt du transporteur dans le couloir de saignée et sélectionne la cuve primaire ayant contenu le sang de la bête consignée ainsi qu'éventuellement les cuves suivantes. Cette ou ces cuves sont alors vidangées vers les moyens de recueil de sang d'équarrissage afin d'éviter une pollution du sang alimentaire déjà recueilli. Il faut remarquer que le sang d'une bête donnée n'est jamais transféré vers le circuit de sang alimentaire avant le moment où elle passe au contrôle vétérinaire grâce au stockage provisoire prévu dans les cuves primaires : l'installation conforme à l'invention permet ainsi d'éviter dans tous les cas, de polluer le sang alimentaire déjà transféré par le sang d'une bête malade.

Bien entendu, après intervention du vétérinaire, la goulotte de réception, les conduits et la ou les cuves primaires qui ont été en contact avec le sang pollué font l'objet d'un nettoyage au moyen de liquides de nettoyage qui sont évacués à l'égout.

La goulotte de réception permet de recueillir le sang au moment même où celui-ci jaillit de la bête dans des conditions de propreté et de stérilité appropriées.

Pour accroître cette stérilité, cette goulotte est de préférence associée à des moyens de ventilation et de filtration, adaptés pour maintenir l'intérieur de celle-ci en légère surpression en air stérilisé.

En outre, selon un mode de réalisation avantageux, cette goulotte est également associée à des moyens d'injection d'un ou plusieurs additifs dans le sang recueilli, en particulier de produits anti-coagulants et/ou conservateurs. On évite ainsi toute altération ou coagulation du sang dans l'installation, et ses composants (cruor et plasma) peuvent être obtenus et stockés sans dénaturation ni disparition de leur qualité alimentaire.

Pour réduire les risques de pollution du sang à l'intérieur de la goulotte de réception (baves, contact du sang avec des éléments externes), ladite goulotte comprend une face supérieure dotée d'une fente de recueil à travers laquelle s'écoule le sang et des joues de guidage inclinées situées de part et d'autre de cette fente de recueil, de façon à guider la bête au voisinage de la partie saignée de celle-ci : le sang jaillissant de cette partie pénètre directement par la fente de recueil sans contact externe et à l'exclusion de tout autre corps.

La forme et l'inclinaison de ces joues de guidage sont adaptées aux caractéristiques physiques des bêtes à saigner ; comme on le verra plus loin, deux types de goulottes peuvent être prévus, l'un pour la récupération du sang de veaux ou d'animaux de caractéristiques physiques analogues, l'autre pour la récupération du sang de gros bovins ou d'animaux de caractéristiques physiques analogues.

L'installation conforme à l'invention peut combiner des moyens spécifiquement adaptés aux veaux, équipant une ou plusieurs chaînes de travail de l'abattoir et des moyens spécifiquement adaptés aux gros bovins, équipant une ou plusieurs autres chaînes.

L'invention ayant été exposée dans sa forme générale, d'autres caractéristiques, buts et avantages se dégageront de la description qui suit en regard des dessins annexés, lesquels présentent à titre d'exemple non limitatif une installation du type ci-dessus évoqué ; sur ces dessins qui font partie intégrante de la présente description :

la figure 1 est un schéma synoptique de cette installation,

la figure 2 est une vue en perspective partielle d'un couloir de saignée de ladite installation,

la figure 3 est une vue en coupe d'une goulotte de réception de sang, destinée à des veaux,

la figure 4 est une vue en coupe d'une goulotte de réception de sang, destinée à des gros bovins,

la figure 5 est un schéma synoptique des moyens de commande de l'installation et la figure 6 un schéma explicatif du fonctionnement de celle-ci.

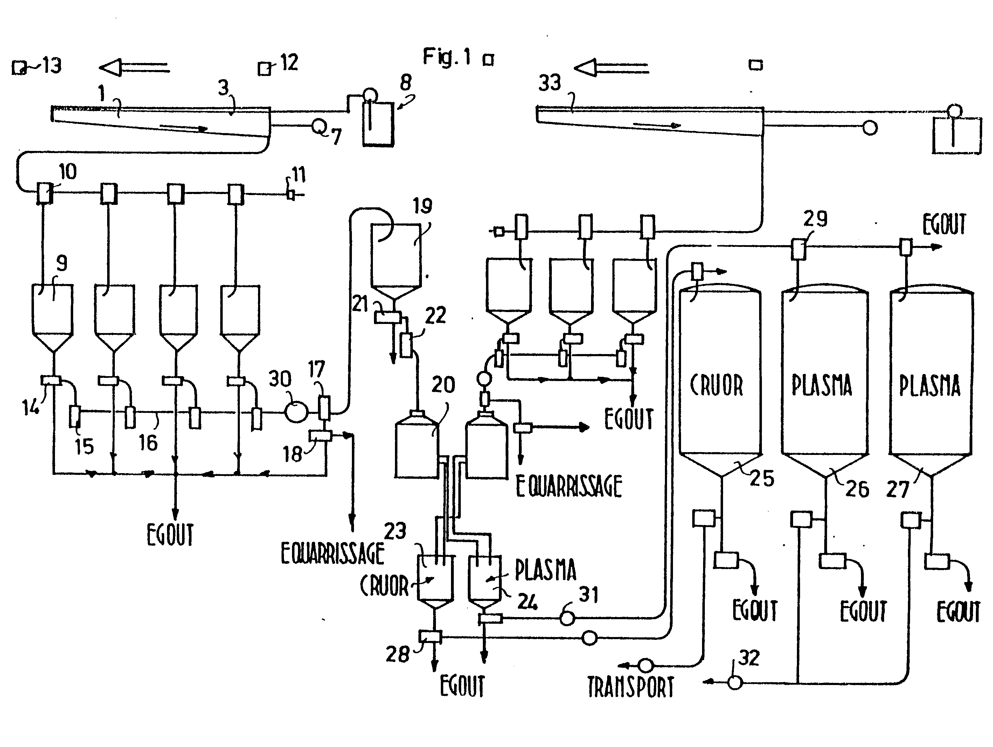

L'installation représentée à titre d'exemple à la figure 1 comprend des moyens spécifiques pour la récupération du sang de veaux de qualité alimentaire, des moyens spécifiques pour la récupération du sang de gros bovins de même qualité et des moyens communs de stockage du cruor et du plasma issus de ce sang de veaux ou de bœufs ; cette installation est appelée à équiper un abattoir de type classique présentant (au moins) deux chaînes de production, composées chacune d'un poste d'abattage, d'un couloir de saignée, d'un circuit de dépeçage et de rigoles de recueil de sang d'équarrissage.

Selon la présente invention, la partie de l'installation destinée à la collecte du sang des bêtes saignées comprend une goulotte de réception de sang 1 ou 33 disposée dans chaque couloir de saignée.

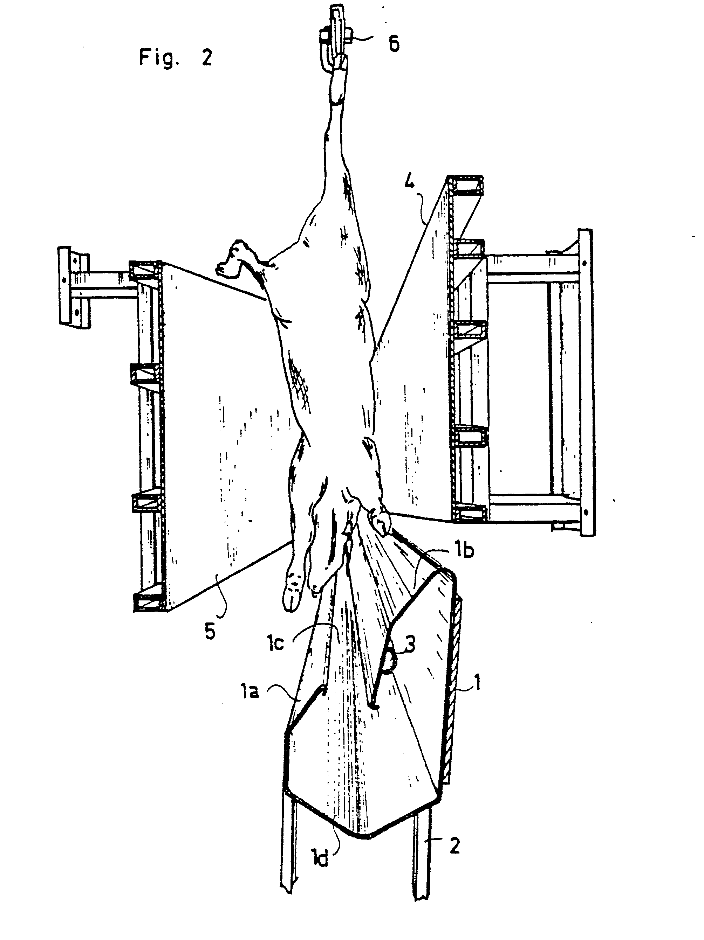

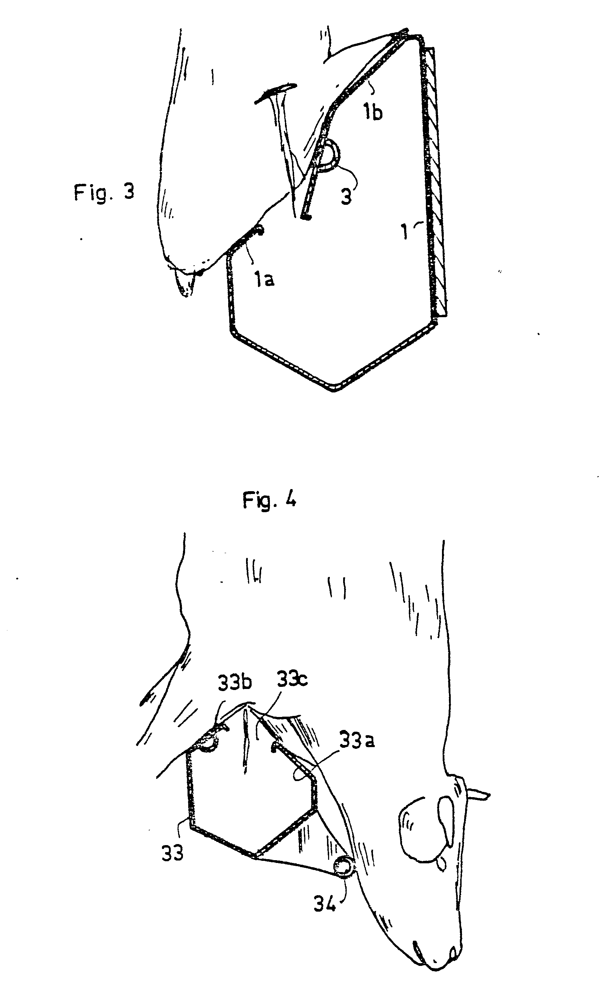

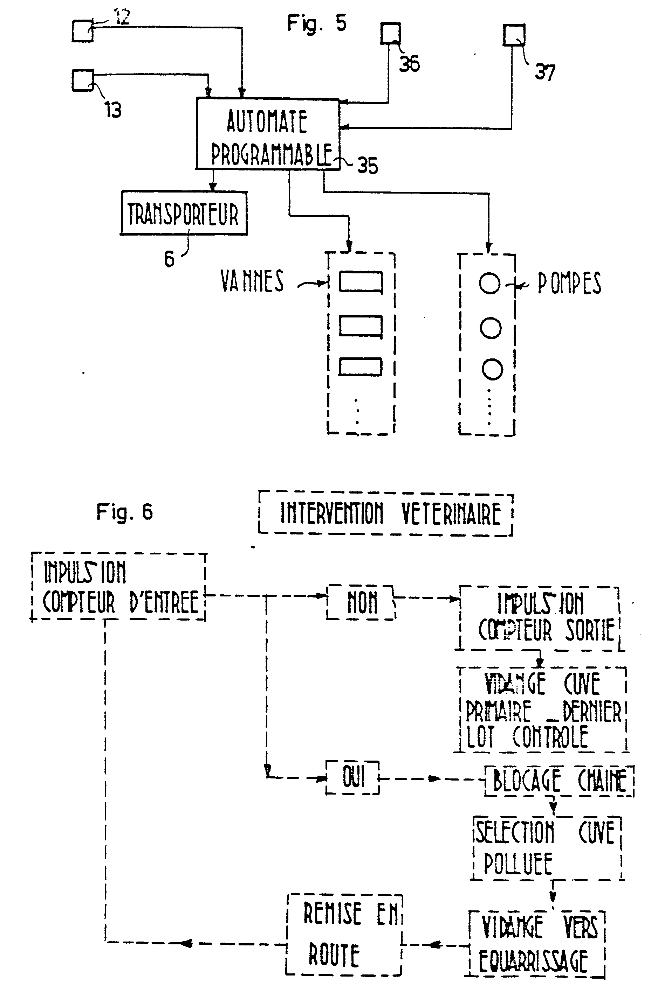

La goulotte 1 que l'on aperçoit aux figures 2 et 3 est destinée aux veaux et comprend, sur sa face supérieure, deux joues 1a et 1b inclinées dans le même sens et situées de part et d'autre d'une fente de recueil 1c.

La joue 1a est inclinée à peu près à 45° en vue de guider le museau du veau comme le montrent les figures, cependant que la joue 1b présente une partie supérieure ayant une inclinaison analogue et une partie inférieure d'inclinaison plus grande, cette joue 1b assure ainsi le guidage de la tête du veau au niveau de son oreille : la tête du veau se trouve légèrement inclinée comme le montrent les figures 2 et 3 ce qui autorise un écoulement direct du sang à travers la fente 1c.

La goulotte 1 est soutenue par des supports 2 au-dessus du fond du couloir qui est muni de façon classique d'un caillebotis surmontant une rigole (réalisée par une forme en béton) en vue du recueil du sang d'équarrissage. La goulotte 1 s'étend sur la longueur du couloir de saignée (qui peut être de l'ordre de 3 mètres) et son fond 1d est incliné vers une extrémité pour permettre l'écoulement du sang ; en l'exemple, cette inclinaison est dirigée vers l'amont, c'est-à-dire vers l'entrée du couloir où arrivent les veaux.

Intérieurement, la goulotte 1 comprend une rampe 3 de pulvérisation d'un additif sous forme liquide, tels que additif anticoagulant et conservateur. Cette rampe 3 qui s'étend sur toute la longueur de ladite goulotte permet de mélanger intimement cet additif au sang, pratiquement à l'instant où celui-ci jaillit de l'animal.

En outre, dans le cas des veaux, le couloir de saignée est équipé, au-dessus de la goulotte 1 et de part et d'autre de celle-ci, de plaques 4 et 5 de positionnement du veau, qui s'étendent le long du couloir et sont agencées comme le montre la figure 2 de façon à maintenir le corps du veau en position légèrement déportée par rapport à la verticale, pattes avant dirigées vers l'arrière.

A cet effet, la plaque 5 se trouve légèrement plus écartée de la goulotte que l'autre plaque 4 et descend plus bas que celle-ci.

Le veau accroché par une ou les pattes arrières à un crochet de transporteur 6 qui permet de le déplacer lentement le long d'un rail dans le couloir de saignée, présente à peu près la position représentée à la figure 2. La face supérieure de la goulotte 1, avec ses joues 1a et 1b, est prévue parallèle au rail du transporteur sur toute la longueur du couloir de façon que la position du veau demeure inchangée lors de sa progression dans le couloir. La vitesse de progression peut être de l'ordre de 1 mètre par minute.

A leur entrée dans le couloir de saignée, les veaux sont décomptés par un compteur d'impulsions (symbolisé en 12 à la figure 1) ; ce compteur classique en lui-même peut être électromécanique (tige repoussée au passage par les veaux) ou optique. Un autre compteur (symbolisé en 13) est disposé à la sortie de la chaîne en aval du circuit de dépeçage, au niveau d'un poste de contrôle vétérinaire où sont examinés les animaux.

De plus, comme le schématise la figure 1, la goulotte 1 est associée à un ventilateur 7 équipé de moyens de filtrage et de moyens de stérilisation d'air (par exemple batterie de lampes ultraviolet ou flux laminaire stérile), qui permettent d'envoyer dans ladite goulotte un air propre et stérile, la mettant en légère surpression interne.

En outre, la rampe de pulvérisation 3 est reliée à un ensemble d'injection d'additif 8, composé d'un réservoir et d'une pompe de dosage permettant de régler le débit d'additif délivré vers ladite rampe.

Par ailleurs, la goulotte de réception 1 est reliée à des cuves primaires telles que 9, par l'entremise de moyens d'aiguillage du flux de sang constitués en l'exemple par une série de vannes, 3 voies, 2 directions telles que 10 ; une vanne de mise à l'égout 11 est prévue en bout de ligne pour permettre le lavage.

Dans le cas des veaux, ces cuves primaires peuvent être au nombre de 4 et présenter chacune une capacité légèrement supérieure au volume de sang fourni par 10 bêtes (70 litres). Ainsi, le temps de saignée et de dépeçage de chaque veau étant de 20 minutes environ (durée séparant le passage au compteur d'entrée et le passage au compteur de sortie) et en supposant que la cadence moyenne de la chaîne soit de 60 veaux à l'heure et sa cadence maximum de 90 veaux à l'heure (performances habituelles d'une chaîne actuelle), le nombre maximum de veaux présents simultanément sur la chaîne est de 30, de sorte que les cuves primaires 9 permettent un stockage provisoire garantissant que le sang d'une bête n'aura pas encore été transféré en aval de l'installation lorsque cette bête passe au poste de contrôle vétérinaire.

Les cuves primaires 9 sont reliées à leur sortie à des circuits de vidange et moyens d'aiguillage qui permettent, soit de transférer le sang de qualité alimentaire en aval de l'installation (cycle normal), soit d'évacuer une ou plusieurs cuves vers les moyens de recueil du sang d'équarrissage (en cas de maladie d'une bête, constatée au poste de contrôle), soit encore pour le lavage, d'évacuer les liquides de nettoyage à l'égout :

En l'exemple, ces circuits de vidange et moyens d'aiguillage comprennent essentiellement :

• une première vanne d'aiguillage 14, disposée à la sortie de chaque cuve et pourvue d'une sortie vers l'égout et d'une seconde sortie,

• une vanne d'isolement 15, disposée sur la seconde sortie de chaque vanne d'aiguillage 14, les diverses vannes d'isolement étant montées sur une canalisation de transfert de sang 16,

• une deuxième vanne d'aiguillage 17 montée sur ladite canalisation et pourvue d'une sortie de sang alimentaire et d'une seconde sortie,

• une troisième vanne d'aiguillage 18, disposée sur la seconde sortie de la vanne précédente et pourvue d'une sortie vers l'égout et d'une sortie de sang d'équarrissage.

La sortie de sang alimentaire de la vanne 17 est reliée à une cuve, dite tampon 19, qui présente une capacité suffisante pour alimenter en continu une centrifugeuse 20 située en aval de celle-ci. Pour une centrifugeuse capable de traiter 600 litres de sang à l'heure, la capacité de la cuve 19 peut être de l'ordre de 600 litres qui garantit en pratique une alimentation en continu de la centrifugeuse.

La cuve tampon 19 est reliée à sa sortie à deux circuits de vidange, l'un pour le transfert du sang alimentaire vers la centrifugeuse, l'autre pour l'évacuation à l'égout des liquides de lavage ; ces circuits sont dotés de moyens d'aiguillage du liquide. En l'exemple sont prévus comme précédemment une vanne d'aiguillage 21 et une vanne d'isolement 22.

La centrifugeuse 20 de type classique est adaptée pour fractionner le sang en cruor et plasma et délivre ces corps vers des moyens de stockage.

Ces derniers comprennent des cuves tampons de cruor et de plasma 23 et 24 et des cuves de stockage final 25, 26 et 27 de capacité plus importante, reliées aux cuves tampons. Les quantités de plasma extraites du sang étant environ 2 fois plus importantes que les quantités de cruor, deux cuves de plasma de 10 000 litres chacune peuvent être prévus pour une cuve unique de cruor de même capacité.

Des vannes d'aiguillage et d'isolement telles que 28 et 29 sont associées aux canalisations pour permettre soit de transférer le cruor ou le plasma vers les cuves de stockage final, soit d'opérer un lavage avec rejet des liquides à l'égout.

A la sortie des cuves de stockage 25, 26 et 27, des conduits de transfert vers des moyens de transport sont prévus, avec des vannes similaires.

Bien entendu, l'installation est complétée par des pompes telles que 30, 31 ou 32 qui assure l'entraînement des liquides.

La partie de l'installation destinée aux gros bovins est similaire à celle ci-dessus décrite et est reliée à cette dernière au niveau des moyens de stockage 23, 24, à la sortie des centrifugeuses.

Toutefois, cette partie destinée aux gros bovins ne comprend pas de cuves tampons (telles que 39) en raison des cadences plus faibles de la chaîne pour ce type d'animal (25 à 30 à l'heure) : les cuves primaires en nombre de 3 d'une capacité de 110 litres chacune environ (7 à 8 bovins) suffisent à assurer une alimentation en continu de la centrifugeuse, tout en garantissant que le sang d'un animal ne sera transféré vers celle-ci que lorsque le contrôle vétérinaire de l'animal aura été effectué (la durée de passage d'un bovin entre le compteur d'entrée et le compteur de sortie est d'environ 30 à 35 minutes).

De plus, comme le montre la figure 4, la goulotte de réception de sang 33 est légèrement différente pour les gros bovins. Dans le cas de ces animaux, le couloir de saignée ne comporte pas de plaques de positionnement et la goulotte 33 comprend, sur sa face supérieure, deux joues 33a et 33b situées de part et d'autre de la fente de recueil 33c et inclinées en sens contraire en V renversé, de façon à guider d'un côté le cou de l'animal et de l'autre les pattes de celui-ci.

Le bœuf est alors positionné, comme le montre la figure 4, disposé à 90° par rapport à la direction d'avancement, la tête passant d'un côté de la goulotte et les pattes de l'autre.

De préférence, la goulotte est dotée, du côté de la joue 33a appelée à guider le cou de l'animal, d'un guide externe 34 adapté pour écarter la tête de l'animal. La saignée qui est opérée pour ces animaux à la base du cou presque au niveau du poitrail délivre ainsi le sang directement dans la goulotte avec des pertes négligeables vers l'extérieur et sans risque de pollution.

Le cycle normal de fonctionnement de l'installation dont le déroulement est assuré par une unité de commande symbolisée en 35 à la figure 5 (qui commande les diverses vannes, la motorisation des transporteurs et les pompes) consiste à décompter les bêtes par lot correspondant à la capacité d'une cuve primaire et à aiguiller, après la saignée des dernières bêtes de chaque lot, l'écoulement de sang vers la cuve primaire qui succède à celle qui vient d'être remplie par le lot précédent ; en l'absence d'intervention du vétérinaire sur un organe d'arrêt de cycle (symbolisé en 36) qui se trouve situé au niveau du poste de contrôle, l'unité de commande commande la vidange vers le circuit de sang alimentaire de la cuve contenant le sang des bêtes du dernier lot contrôlé.

En cas d'intervention du vétérinaire se traduisant par une manœuvre sur l'organe 36 sus-évoqué, la chaîne est bloquée et la cuve contenant le sang de la bête malade et éventuellement les cuves suivantes sont vidangées vers l'équarrissage. Après lavage des cuves et conduits souillés ainsi que de la goulotte, le cycle normal peut être relancé par un bouton de remise en route 37. Le fonctionnement de l'installation tel que ci-dessus résumé est schématisé par le diagramme de la figure 6.

Il est à noter que, pour réduire les incidents sur la chaîne, les bêtes visiblement malades sont de préférence sélectionnées avant abattage pour faire l'objet d'une procédure spéciale. On peut ainsi diminuer notablement les quantités de sang envoyées à l'équarrissage. De même en cas de maladie bénigne d'une bête, le vétérinaire peut prendre la décision de ne vidanger vers l'équarrissage que la cuve qui a contenu le sang de la bête malade, estimant alors que le passage de ce sang dans la goulotte et les conduits n'a pas souillé suffisamment ces éléments pour rendre le sang des bêtes suivantes impropres.

Par ailleurs, les cycles de lavage peuvent être exécutés manuellement en délivrant dans l'installation les différents liquides de lavage, après avoir disposé les divers circuits en position d'évacuation vers l'égout.

Ces opérations peuvent également être réalisées de façon automatique ; l'installation est alors complétée par des moyens de lavage automatique comportant essentiellement : des cuves de stockage d'eau froide, d'eau chaude, de produits lessiviels et de produits de rinçage, un réseau de distribution de ces liquides vers les différents éléments de l'installation et une unité de pilotage permettant l'injection desdits liquides et leur rejet à l'égout suivant un cycle programmé.

Tous les matériaux qui ont servi à fabriquer les divers organes de l'installation en contact avec le sang (cuves, conduits, vannes...) sont de qualité alimentaire afin de n'introduire aucune souillure du sang.

## Revendications

1. Installation pour la récupération de sang de qualité alimentaire dans un abattoir de type classique, doté de chaînes de travail comprenant un poste d'abattage, un couloir de saignée et un circuit de dépeçage, ainsi que des moyens de recueil de sang d'équarrissage, ladite installation comprenant, associés à chaque chaîne de travail :

• un transporteur (6) disposé en partie haute du couloir de saignée en vue de suspendre les bêtes et de les entraîner le long dudit couloir après la saignée,

• une goulotte de réception de sang (1, 33) s'étendant le long du couloir de saignée et ayant une forme adaptée pour guider les bêtes au voisinage de la partie saignée,

et étant caractérisée en ce qu'elle comprend en combinaison :

• un poste de contrôle vétérinaire, disposé en aval du circuit de dépeçage et comportant un organe manuel d'interruption de cycle (36),

• une série de cuves, dites primaires (9), adaptées pour permettre un stockage provisoire d'une quantité de sang supérieure à celle fournie par le nombre maximum de bêtes susceptibles d'être présentes à un instant donné sur la chaîne depuis l'entrée du couloir de saignée jusqu'au poste de contrôle vétérinaire,

• des conduits reliant chaque cuve primaire (9) à la sortie de la goulotte, lesdits conduits étant associés à des moyens d'aiguillage (10) de l'écoulement vers telle ou telle cuve primaire sélectionnée,

• trois circuits de vidanges des cuves primaires, reliés à la sortie de celles-ci et dotés de moyens d'aiguillage (14 à 18), ces circuits comprenant un premier circuit pour le transfert du sang de qualité alimentaire, un deuxième circuit relié aux moyens de recueil de sang d'équarrissage et un troisième circuit relié à l'égout pour l'évacuation de liquide de nettoyage,

• des moyens de fractionnement du sang (20) reliés au circuit de vidange du sang alimentaire et adaptés pour délivrer à ses sorties des fractions séparées telles que cruor et plasma,

• des moyens de stockage desdites fractions (23 à 29), reliés aux sorties des moyens de fractionnement,

• des moyens de pompage (30, 31, 32) adaptés pour assurer l'écoulement dans les différents circuits ou conduits,

• des moyens (12, 13) de comptage des bêtes passant dans la chaîne de travail,

• et une unité de commande (35) agencée pour recevoir les signaux issus des moyens de comptage (12, 13) et de l'organe d'interruption (36) du poste vétérinaire, et adaptée pour assurer, en l'absence d'intervention sur l'organe d'interruption, le déroulement d'un cycle programmé de récupération de sang alimentaire et, en cas d'intervention sur cet organe d'interruption, pour commander l'arrêt du cycle et la vidange vers les moyens de recueil de sang d'équarrissage de la cuve primaire ayant contenu le sang de la bête qui a déterminé l'intervention et, éventuellement, des cuves primaires suivantes.

2. Installation selon la revendication 1, comprenant des moyens d'injection (3, 8) d'additifs dans la goulotte de réception de sang (1, 33), en particulier produits anti-coagulants et/ou conservateurs.

3. Installation selon la revendication 2, caractérisée en ce que les moyens d'injection d'additifs comprennent une rampe de pulvérisation (3) disposée à l'intérieur de la goulotte le long de celle-ci, et un réservoir d'additifs associé à une pompe de dosage (8) adaptée pour régler le débit d'additifs délivré vers la rampe.

4. Installation selon l'une des revendications précédentes, caractérisée en ce que la goulotte de réception (1, 33) présente une face supérieure comportant une fente de recueil (1c, 33c) à travers laquelle s'écoule le sang et, de part et d'autre de ladite fente de recueil, des joues de guidage inclinées (1a, 1b ; 33a, 33b), adaptées pour servir de guide aux parties de la bête situées au voisinage et de part et d'autre de la partie saignée.

5. Installation selon la revendication 4, permettant la récupération de sang lors de l'abattage de veaux ou bêtes de caractéristique physiques analogues, caractérisée en ce que la goulotte de réception (1) comprend, sur sa face supérieure, deux joues (1a, 1b) situées de part et d'autre de la fente de recueil (1c) et inclinées dans le même sens, en vue de guider la tête de chaque veau au niveau de l'oreille et du museau et de conférer à celle-ci une position inclinée.

6. Installation selon la revendication 5, caractérisée en ce que le couloir de saignée est équipé, au-dessus de la goulotte (1) et de part et d'autre de celle-ci, de plaques (4, 5) de positionnement du veau, s'étendant le long du couloir de saignée et agencées pour maintenir le corps du veau en position légèrement déportée par rapport à la verticale, pattes avant dirigées vers l'arrière.

7. Installation selon la revendication 4 permettant la récupération de sang lors de l'abattage de gros bovins ou bêtes de caractéristiques physiques analogues, caractérisée en ce que la goulotte de réception (33) comprend, sur sa face supérieure, deux joues (33a, 33b) situées de part et d'autre de la fente de recueil (33c) et inclinées en sens contraire en V renversé, en vue de guider d'un côté le cou de l'animal et de l'autre les pattes de celui-ci.

8. Installation selon la revendication 7, dans laquelle la goulotte (33) est dotée, du côté de la joue (33a) appelée à guider le cou de l'animal, d'un guide externe (34) adapté pour écarter la tête de l'animal.

9. Installation selon l'une des revendications précédentes, caractérisée en ce qu'elle comprend des moyens de ventilation et de filtration (7) associés à la goulotte (1, 33) et adaptés pour maintenir l'intérieur de celle-ci en légère surpression en air stérilisé.

10. Installation selon l'une des revendications précédentes, caractérisée en ce que les circuits de vidange des cuves primaires et les moyens d'aiguillage associés auxdits circuits comprennent :

• une première vanne d'aiguillage (14), disposée à la sortie de chaque cuve (9) et pourvue d'une sortie vers l'égout et d'une seconde sortie,

• une vanne d'isolement (15), disposée sur la seconde sortie de chaque vanne d'aiguillage (14), les diverses vannes d'isolement (15) étant montées sur une canalisation de transfert de sang (16),

• une deuxième vanne d'aiguillage (17) montée sur ladite canalisation (16) et pourvue d'une sortie de sang alimentaire et d'une seconde sortie,

• une troisième vanne d'aiguillage (18) disposée sur la seconde sortie de la vanne précédente (17) et pourvue d'une sortie vers l'égout et d'une sortie de sang d'équarrissage.

11. Installation selon l'une des revendications précédentes, caractérisée en ce que, en amont des moyens de fractionnement du sang (20), sont interposés sur le circuit de vidange du sang alimentaire :

• une cuve, dite tampon (19), reliée audit circuit de vidange du sang alimentaire,

• deux circuits de vidange de la cuve tampon avec des moyens d'aiguillage (21, 22), ces circuits étant reliés à la sortie de la cuve (19), l'un pour le transfert du sang alimentaire, l'autre pour l'évacuation à l'égout des liquides de nettoyage.

12. Installation selon l'une des revendications précédentes, caractérisée en ce que :

• les moyens de comptage comprennent un compteur d'impulsions, dit compteur d'entrée (12), situé à l'entrée du couloir de saignée, et un compteur d'impulsions, dit compteur de sortie (13), situé en aval du circuit de dépeçage au niveau du poste de contrôle vétérinaire,

• chaque cuve primaire (9) présente une capacité au moins égale à la quantité de sang fournie par un nombre prédéterminé N de bêtes,

• l'unité de commande (35) est adaptée pour commander le déroulement du cycle normal suivant : aiguillage du sang vers une autre cuve primaire au terme de chaque lot de N bêtes enregistrées par le compteur d'entrée, et vidange vers le circuit de sang alimentaire de la cuve contenant le sang du dernier lot de N bêtes enregistrées au compteur de sortie.

13. Installation selon l'une des revendications précédentes, dans laquelle les moyens de fractionnement du sang sont constitués par une centrifugeuse (20).

14. Installation selon l'une des revendications précédentes, caractérisée en ce que les moyens de stockage des fractions de sang comprennent des cuves tampons (23, 24) reliées aux sorties des moyens de fractionnement (20) et des cuves de stockage final (25, 26, 27) de capacité plus importantes, reliées auxdites cuves tampons (23, 24).

15. Installation selon l'une des revendications précédentes, caractérisée en ce qu'elle comprend des moyens de lavage automatique comportant des cuves de stockage d'eau froide, d'eau chaude, de produits lessiviels et de produits de rinçage, un réseau de distribution de ces liquides vers les différents éléments de l'installation et une unité de pilotage permettant l'injection desdits liquides et leur rejet à l'égout suivant un cycle programmé.

16. Installation permettant la récupération de sang de qualité alimentaire provenant aussi bien de veaux ou animaux de caractéristiques physiques analogues, que de gros bovins ou animaux de caractéristiques physiques analogues, caractérisée en ce qu'elle se compose de la combinaison d'au moins une installation conforme aux revendications 5, 6 et 11 et d'au moins une installation conforme aux revendications 7 et 8, les moyens de stockage des fractions séparées du sang étant communs auxdites installations.

**Claims**

1. Plant for the extraction of food-quality blood in a slaughterhouse of traditional type, equipped with processing lines comprising a slaughtering station, a bleeding passage and a dismembering circuit as well as means for receiving cutting-up blood, said plant comprising, in association with every processing line :

• a conveyor (6) located above the bleeding passage with a view to suspending the animals and transporting them along said passage after bleeding,

• a channel for the reception of blood (1, 33) extending along the bleeding passage and having a form suitable for guiding the animals in the proximity of the bled part,
and characterised in that it comprises the following in combination :

• a veterinary control station situated downstream of the dismembering circuit and comprising a manual device for interrupting the cycle (36),

• a series of so-called primary tanks (9) designed to enable provisional storage of a quantity of blood greater than that furnished by the maximum number of animals liable to be present in the line at any given moment, from the entry of the bleeding passage to the veterinary control station,

• conduits linking every primary tank (9) with the outlet of the channel, said conduits being associated with shunting means (10) of the flow towards such or such a primary tank selected,

• three primary tank discharge circuits, linked to the outlet of said tanks and equipped with shunting means (14 to 18), these circuits comprising a first circuit for the transfer of food-quality blood, a second circuit linked to the means for receiving cutting-up blood and a third circuit linked to the drain for the disposal of cleaning fluid,

• means for fractionating the blood (20) connected to the circuit for discharging the food-quality blood and capable of presenting at their outlets separate fractions such as cruor and plasma,

• means for storing said fractions (23 to 29), linked to the outlets of the fractionating means,

• means for pumping (30, 31, 32) capable of ensuring the flow in the different circuits or conduits,

• means (12, 13) for counting the animals passing through the processing line,

• and a control unit (35) designed to receive the signals from the counting means (12, 13) and the interrupting device (36) of the veterinary station and capable of ensuring, if the interrupting device is not actuated, the implementation of a programmed cycle for the extraction of food-quality blood and, if said interrupting device is actuated, of ordering discontinuation of the cycle and discharge towards the means for receiving cutting-up blood of the primary tank having contained the blood of the animal which has caused the actuation, and, possibly, of the following primary tanks.

2. Plant according to claim 1, comprising means for injecting (3, 8) additives into the blood reception channel (1, 33), in particular anticoagulant and/or conserving products.

3. Plant according to claim 2, characterised in that the means for injecting additives comprise an atomisation ramp (3) located within the channel along the latter and a container for additives associated with a dosing pump (8) capable of regulating the flow of additives supplied to the ramp.

4. Plant according to one of the preceding claims, characterised in that the reception channel (1, 33) has an upper face comprising a receiving slot (1c, 33c), through which flows the blood and on either side of said receiving slot inclined guide plates (1a, 1b ; 33a, 33b) capable of guiding the parts of the animal located in the proximity and on either side of the bled part.

5. Plant according to claim 4 enabling the extraction of blood when slaughtering calves or animals of analogous physical characteristics, characterised in that the reception channel (1) comprises on its upper face two plates (1a, 1b) situated on either side of the receiving slot (1c) and inclined in the same direction, with a view to guiding the head of every calf at the level of the ear and of the muzzle and of imparting to the latter an inclined position.

6. Plant according to claim 5, characterised in that the bleeding channel is equipped, above channel (1) and at either side of the latter, with plates (4, 5) for positioning the calf, extending along the channel for the reception of blood and so designed as to maintain the carcass of the calf in a position slightly offset in relation to the perpendicular, with the front legs directed towards the rear.

7. Plant according to claim 4, enabling the extraction of blood when slaughtering large cattle or animals of analogous physical characteristics, characterised in that the reception channel (33) comprises, on its upper face, two plates (33a, 33b) located at either side of the receiving slot (33c) and inclined in opposite directions in the form of an inverse V, with a view to guiding on one side the neck of the animal, and on the other side its legs.

8. Plant according to claim 7, in which the channel (33) is provided, on the side of plate (33a) for guiding the neck of the animal, with an external guide (34) capable of moving away the head of the animal.

9. Plant according to one of the preceding claims, characterised in that it comprises means for ventilation and filtering (7) associated with the duct (1, 33) and so designed as to maintain within the latter a slight excess pressure due to sterilised air.

10. Plant according to one of the preceding claims, characterised in that the discharge circuits of the primary tanks and the shunting means associated with said circuits comprise :

• a first shunt valve (14) located at the outlet of every tank (9) and provided with an outlet towards the drain and a second outlet,

• a shut-off valve (15), located at the second outlet of every shunt valve (14), the different shut-off valves (15) being mounted on a blood transfer duct (16),

• a second shunt valve (17) mounted on said duct (16) and provided with an outlet of food-quality blood and a second outlet,

• a third shunt valve (18) located on the second outlet of the preceding valve (17) and provided with an outlet towards the drain and an outlet of cutting-up blood.

11. Plant according to one of the preceding claims, characterised in that, upstream of the blood fractionating means (20), are located on the circuit for discharging the food-quality blood,

• a so-called buffer tank (19) connected with said circuit for discharging the food-quality blood,

• two circuits for discharging the buffer tank with shunting means (21, 22), these circuits being connected to the outlet of tank (19), one for transferring the food-quality blood, and the other for discharging cleaning fluids into the drain.

12. Plant according to one of the preceding claims, characterised in that

• the counting means comprise an impulse counter, the so-called entry counter (12), located at the entry of the bleeding passage, and an impulse counter, the so-called output counter (13), located downstream of the dismembering circuit at the level of the veterinary control station,

• every primary tank (9) has a capacity at least equal to the quantity of blood furnished by a predetermined number N of animals,

• the control unit (35) is capable of ordering implementation of the following normal cycle : Shunting of the blood towards another primary tank upon completion of every batch of N animals recorded by the entry counter, and discharge towards the food-quality blood circuit of the tank containing the blood of the last batch of N animals recorded by the output counter.

13. Plant according to one of the preceding claims, in which the means of fractionating the blood consist in a centrifuge (20).

14. Plant according to one of the preceding claims, characterised in that the means of storing the blood fractions comprise buffer tanks (23, 24) linked to the outlets of the fractionating means (20) and the more capacious final storage tanks (25, 26, 27) linked to said buffer tanks (23, 24).

15. Plant according to one of the preceding claims, characterised in that it comprises means for automatic washing including vessels for storing cold water, hot water, detergent products and rinsing products, a network for the distribution of these liquids towards the various parts of the plant and a control unit enabling injection of said liquids and their discharge to the drain in accordance with a programmed cycle.

16. Plant permitting the extraction of food-quality blood both from calves or animals of analogous physical characteristics and of large cattle or animals of analogous physical characteristics, characterised in that it is composed of the combination of at least one plant according to claims 5, 6 and 11 and at least one plant according to claims 7 and 8, the means for storing separated blood fractions being common to said plants.

## Patentansprüche

1. Einrichtung zur Gewinnung von für Nahrungszwecke geeignetem Blut in einem Schlachthaus herkömmlicher Art, versehen mit Verarbeitungsstraßen, die eine Schlachtstation, einen Ausblutgang und einen Zerkleinerungskreis sowie Mittel zur Aufnahme des beim Zerschneiden anfallenden Bluts umfassen, wobei die besagte Einrichtung in Verbindung mit jeder Verarbeitungsstraße die folgenden Teile umfaßt :

• einen oberhalb des Ausblutgangs angeordneten Förderer (6), zum Aufhängen der Tiere und zu deren Beförderung nach dem Ausbluten entlang des besagten Ganges,

• einen Blutaufnahmekanal (1, 33), der sich entlang des Ausblutganges erstreckt und so geformt ist, daß er die Tiere im Bereich des ausgebluteten Teils führt,

und dadurch gekennzeichnet ist, daß er in Kombination die folgenden Teile umfaßt :

• eine tierärztliche Kontrollstation, die dem Zerkleinerungskreis nachgeschaltet ist und eine manuelle Vorrichtung zur Unterbrechung des Kreises (36) umfaßt,

• eine Reihe von sogenannten Primärbehältern (9), die so beschaffen sind, daß sie provisorische Lagerung einer Blutmenge gestatten, die größer ist als die Menge, die durch die größte Anzahl von Tieren geliefert werden kann, die sich zu irgend einem Zeitpunkt in der Straße, und zwar vom Eingang des Ausblutganges bis zur tierärztlichen Kontrollstation, befinden können,

• Leitungen, die jeden Primärbehälter (9) mit dem Ausgang des Kanals verbinden, wobei die besagten Leitungen mit Umleitmitteln (10) des Flusses nach dem einen oder anderen gewählten Primärbehälter verbunden sind,

• drei Kreise zur Entleerung der Primärbehälter, die an deren Ausgang angeschlossen und mit Umleitmitteln (14 bis 18) versehen sind, wobei diese Kreise einen ersten Kreis für die Übertragung des für Nahrungszwecke geeigneten Blutes, einen zweiten mit den Mitteln zur Aufnahme des beim Zerschneiden anfallenden Blutes verbundenen Kreis und einen dritten zum Ablassen der Reinigungsflüssigkeit mit der Kanalisation verbundenen Kreis umfassen,

• Blutfraktionierungsmittel (20), die mit dem Kreis zur Entleerung des für Nahrungszwecke geeigneten Blutes verbunden und so beschaffen sind, daß sie an dessen Ausgängen getrennte Fraktionen wie Cruor und Plasma liefern,

• Mittel zur Lagerung der besagten Fraktionen (23 bis 29), die mit den Ausgängen der Fraktionierungsmittel verbunden sind,

• Pumpmittel (30, 31, 32), die so beschaffen sind, daß sie den Fluß in den verschiedenen Kreisen bzw. Leitungen gewährleisten,

• Mittel (12, 13) zum Zählen der durch die Verarbeitungsstraße hindurchgeleiteten Tiere,

• und eine Steuereinheit (35), die so beschaffen ist, daß sie die von den Zählvorrichtungen (12, 13) und der Unterbrechungsvorrichtung (36) der tierärztlichen Station ausgehenden Signale empfängt und in der Lage ist, falls die Unterbrechungsvorrichtung nicht betätigt wird, den Ablauf eines programmierten Zyklus zur Gewinnung von für Nahrungszwecke geeignetem Blut zu gewährleisten, und, falls diese Unterbrechungsvorrichtung betätigt wird, die Unterbrechung des Zyklus zu befehlen, sowie das Entleeren in die Aufnahmemittel des beim Zerschneiden anfallenden Blutes des Primärbehälters, der das Blut des Tieres enthalten hat, das die Betätigung ausgelöst hat, sowie möglicherweise der darauf folgenden Primärbehälter.

2. Einrichtung im Einklang mit Anspruch 1, mit Mitteln zum Einspritzen (3, 8) von Zusatzstoffen in den Blutaufnahmekanal (1, 33), insbesondere von koagulationshemmenden und/oder konservierenden Produkten.

3. Einrichtung im Einklang mit Anspruch 2, dadurch gekennzeichnet, daß die Mittel zur Einspritzung von Zusatzstoffen eine Zerstäubungsrampe (3) umfassen, die innerhalb und entlang des Kanals angeordnet ist, sowie einen Zusatzstoffbehälter, der mit einer Dosierpumpe (8) verbunden ist, die so beschaffen ist, daß sie den Fluß der der Rampe zugeführten Zusatzstoffe regelt.

4. Einrichtung im Einklang mit einem der vorhergehenden Ansprüche, dadurch gekennzeichnet, daß der Aufnahmekanal (1, 33) eine obere Fläche hat, die einen Aufnahmeschlitz (1c, 33c) umfaßt, durch den das Blut fließt, sowie zu beiden Seiten des besagten Aufnahmeschlitzes geneigte Leitplatten (1a, 1b ; 33a, 33b), die so beschaffen sind, daß sie die Teile des Tieres im Bereiche und zu beiden Seiten des ausgebluteten Teils führen.

5. Einrichtung im Einklang mit Anspruch 4, die Gewinnung des Blutes beim Schlachten von Kälbern oder Tieren mit gleichartigen körperlichen Merkmalen gestattet, dadurch gekennzeichnet, daß der Aufnahmekanal (1) an seiner oberen Fläche zwei Platten (1a, 1b) umfaßt, die sich zu beiden Seiten des Aufnahmeschlitzes (1c) befinden und in der gleichen Richtung geneigt sind, um den Kopf jedes Kalbes in Höhe des Ohres und des Maules zu führen und diesem eine geneigte Lage zu verleihen.

6. Einrichtung im Einklang mit Anspruch 5, dadurch gekennzeichnet, daß der Ausblutgang oberhalb des Kanals (1) und zu beiden Seiten davon Platten (4, 5) zum Positionieren des Kalbes besitzt, die sich entlang des Ausblutkanals erstrecken und so beschaffen sind, daß sie den Körper des Kalbes leicht im Verhältnis zur Senkrechten versetzt halten, wobei die Vorderbeine nach rückwärts gerichtet sind.

7. Einrichtung im Einklang mit Anspruch 4, die die Gewinnung von Blut beim Schlachten großer Rinder oder Tiere mit gleichartigen körperlichen Merkmalen gestattet, dadurch gekennzeichnet, daß der Aufnahmekanal (33) an seiner oberen Fläche zwei Platten (33a, 33b) umfaßt, die zu beiden Seiten des Aufnahmeschlitzes (33c) angeordnet und entgegengesetzt in Form eines umgekehrten V geneigt sind, um an einer Seite den Hals des Tieres und an der anderen dessen Beine zu führen.

8. Einrichtung im Einklang mit Anspruch 7, wobei der Kanal (33) auf der Seite der Platte (33a), die den Hals des Tieres führt, mit einer äußeren Führvorrichtung (34) versehen ist, die so beschaffen ist, daß sie den Kopf des Tieres wegbewegt.

9. Einrichtung im Einklang mit einem der vorstehenden Ansprüche, dadurch gekennzeichnet, daß sie mit dem Kanal (1, 33) in Verbindung stehende Ventilations- und Filtermittel (7) umfaßt, die so beschaffen sind, daß sie im Inneren des besagten Kanals einen leichten durch sterilisierte Luft bedingten Überdruck bedingen.

10. Einrichtung im Einklang mit einem der vorstehenden Ansprüche, dadurch gekennzeichnet, daß die Kreise zur Entleerung der Primärbehälter und die mit den besagten Kreisen in Verbindung stehenden Umleitmittel folgende Teile umfassen :

• Ein erstes Umleitventil (14), das sich am Ausgang jedes Behälters (9) befindet und mit einem zu der Kanalisation führenden Ausgang sowie einem zweiten Ausgang versehen ist,

• ein Absperrventil (15), das an dem zweiten Ausgang jedes Umleitventils (14) angeordnet ist, wobei sich die verschiedenen Absperrventile (15) an einer Leitung zur Übertragung des Blutes (16) befinden,

• ein zweites Umleitventil (17), das an der besagten Leitung (16) angeordnet und mit einem Ausgang für für Nahrungszwecke geeignetes Blut sowie mit einem zweiten Ausgang versehen ist,

• ein drittes Umleitventil (18), das sich an dem zweiten Ausgang des vorhergehenden Ventils (17) befindet und mit einem Ausgang zur Kanalisation und einem Ausgang für das beim Zerschneiden anfallende Blut versehen ist.

11. Einrichtung im Einklang mit einem der vorstehenden Ansprüche, dadurch gekennzeichnet, daß die folgenden Teile vor den Blutfraktionierungsmitteln (20) an dem Kreis zur Entleerung von für Nahrungszwecke geeignetem Blut angeordnet sind :

• Ein sogenannter Zwischenbehälter (19), der mit dem besagten Kreis zur Entleerung von für Nahrungszwecke geeignetem in Verbindung steht,

• zwei Kreise zum Entleeren des Zwischenbehälters mit Umleitmitteln (21, 22), wobei diese Kreise mit dem Ausgang des Behälters (19) verbunden sind, wobei ein Kreis für die Übertragung des für Nahrungszwecke geeigneten Bluts dient, und der andere zum Entleeren von Reinigungsflüssigkeiten in die Kanalisation.

12. Einrichtung im Einklang mit einem der vorstehenden Ansprüche, dadurch gekennzeichnet,

• daß die Zählmittel einen Impulszähler, den sogenannten Eingangszähler (12), umfassen, der sich am Eingang des Ausblutganges befindet, sowie einem Impulszähler, dem sogenannten Ausgangszähler (13), der dem Zerkleinerungskreis im Bereich der tierärztlichen Kontrollstation nachgeschaltet ist,

• daß jeder Primärbehälter (9) ein Fassungsvermögen hat, das mindestens für die Blutmenge ausreicht, die von einer vorbestimmten Anzahl N von Tieren geliefert wird,

• daß die Steuereinheit (35) so beschaffen ist, daß sie den Ablauf des folgenden normalen Zyklus befiehlt : Umleitung des Blutes bei Abschluß jeder Partie von N durch den Eingangszähler registrierten Tieren und Entleerung des Behälters, der das Blut der letzten Partie von durch den Ausgangszähler registrierten N Tiere enthält, in den Kreis des für Nahrungszwecke geeigneten Blutes.

13. Einrichtung im Einklang mit einem der vorstehenden Ansprüche, in der die Blutfraktionierungsmittel in einer Zentrifuge (20) bestehen.

14. Einrichtung im Einklang mit einem der vorstehenden Ansprüche, dadurch gekennzeichnet, daß die Mittel zur Lagerung der Blutfraktionen Zwischenbehälter (23, 24) umfassen, die mit den Ausgängen der Fraktionierungsmittel (20) und den mit den besagten Zwischenbehältern (23, 24) in Verbindung stehen Endlagerungsbehältern (25, 26, 27), deren Fassungsvermögen größer ist, verbunden sind.

15. Einrichtung im Einklang mit einem der vorstehenden Ansprüche, dadurch gekennzeichnet, daß sie Mittel zum automatischen Waschen umfaßt, die Behälter zur Speicherung von kaltem Wasser, heißem Wasser, Reinigungsmitteln und Spülmitteln einschließen, sowie ein Netzwerk zur Verteilung dieser Flüssigkeiten an die verschiedenen Teile der Einrichtung und eine Steuereinheit, die das Einspritzen der besagten Flüssigkeiten und deren Ablaß in die Kanalisation nach einem programmierten Zyklus gestattet.

16. Einrichtung, die die Gewinnung von für Nahrungszwecke geeignetem Blut sowohl von Kälbern oder Tieren mit gleichartigen körperlichen Merkmalen als auch von großen Rindern oder Tieren mit gleichartigen körperlichen Merkmalen gestattet, dadurch gekennzeichnet, daß sie sich aus der Kombination von mindestens einer den Ansprüchen 5, 6 und 11 entsprechenden Einrichtung und mindestens einer den Ansprüchen 7 und 8 entsprechenden Einrichtung zusammensetzt, wobei die Mittel zur Lagerung der getrennten Blutfraktionen beiden Einrichtungen gemeinsam sind.

Fig. 1

13    12    Fig. 1

33

1    3    8    7

10    11    19

9    21    22    20

14    15    16    30    17    18    EGOUT

EGOUT    23    CRUOR    PLASMA    24    31    32

EQUARRISSAGE    28    EGOUT    TRANSPORT

EQUARRISSAGE

CRUOR    PLASMA    PLASMA

25    26    27    29    EGOUT

EGOUT    EGOUT    EGOUT

0 077 580

0 077 580

Fig. 2

2

Fig. 3

Fig. 4

**0 077 580**

Fig. 5

AUTOMATE
PROGRAMMABLE — 35

TRANSPORTEUR

6

VANNES

POMPES

12
13
36
37

Fig. 6

INTERVENTION VETERINAIRE

IMPULSION
COMPTEUR D'ENTREE

NON

IMPULSION
COMPTEUR SORTIE

VIDANGE CUVE
PRIMAIRE — DERNIER
LOT CONTROLE

OUI

BLOCAGE CHAINE

SELECTION CUVE
POLLUEE

REMISE EN
ROUTE

VIDANGE VERS
EQUARRISSAGE

4